# EUROPÄISCHE PATENTANMELDUNG

(11) **EP 1 510 771 A1**
(43) Veröffentlichungstag der Anmeldung: **02.03.2005**
(21) Anmeldenummer: 04019867.3
(22) Anmeldetag: 21.08.2004
(51) Int. Cl.: F27D 3/00

(54) **Roboter-Greifvorrichtung**

(30) Priorität: 29.08.2003 DE 10339834
(71) Anmelder: Maschinen- und Stahlbau, Julius Lippert GmbH & Co. KG, 92690 Pressath (DE)
(72) Erfinder:
(74) Vertreter: LOUIS- PÖHLAU- LOHRENTZ

(57) **Zusammenfassung**

Es wird eine Roboter-Greifervorrichtung (10) zum automatischen Manipulieren von Gegenständen (12) beschrieben, welche ein Basiselement (14) und eine am Basiselement (14) angebrachte Greiferaufhängung (18) aufweist. An der Greiferaufhängung (18) sind ein Greiferorgan (22) in einer ersten Raumrichtung (28) und eine Gegenhaltereinrichtung (24) in einer zur ersten Raumrichtung (28) mindestens annähernd senkrechten zweiten Raumrichtung (30) hin- und herverstellbar angeordnet. An der Greiferaufhängung (18) ist in der Nachbarschaft des Greiferorganes (22) eine Vakuumgreifeinrichtung (45) vorgesehen, die zum Greifen und temporären Festhalten eines Unterlageflächenelementes (47) für den jeweiligen Gegenstand (12) dient. Bei dem Unterlageflächenelement (47) kann es sich beispielsweise um eine Brennunterlage für ein zu brennendes Gut (12) handeln.

## Beschreibung

Die Erfindung betrifft eine Roboter-Greifvorrichtung zum automatischen Manipulieren von Gegenständen, insbesondere von stoß- und/oder bruchempfindlichem Gut, wobei die Roboter-Greifvorrichtung ein Basiselement und eine am Basiselement angebrachte Greiferaufhängung aufweist, wobei zwischen der Greiferaufhängung und dem Basiselement eine Gewichtsentlastung vorgesehen ist, und an der Greiferaufhängung ein Greiferorgan in einer ersten Raumrichtung und eine Gegenhaltereinrichtung in einer zur ersten Raumrichtung mindestens annähernd senkrechten Raumrichtung hin- und herverstellbar angeordnet sind.

Eine derartige Roboter-Greifvorrichtung wird z. B. mit ihrem Basiselement an einem Arm eines Mehrgelenk-Roboters angebracht, um Gegenstände, insbesondere stoß- und/oder bruchempfindliches Gut, zuverlässig greifen zu können, um das besagte Gut dann mit Hilfe der Roboter-Greifvorrichtung beispielsweise an eine Transporteinrichtung zu übergeben, wonach die Roboter-Greifvorrichtung von dem manipulierten, d. h. beispielsweise an der Transporteinrichtung positionierten Gut wieder gelöst wird und zum Greifen eines weiteren Guts zur Verfügung steht. Mit Hilfe der Transporteinrichtung kann dann das Gut zu einer weiteren Station, wie einer Bearbeitungsstation, einer Brennstation d. h. einem Brennofen, einer Kontrollstation oder dergleichen transportiert werden.

Insbesondere zum Brennen von keramischen Gut werden üblicherweise Brennunterlagen verwendet, auf welchen das zu brennende Gut ruht. Die Manipulation derartiger Brennunterlagen stellt einen nicht zu vernachlässigenden Aufwand dar.

Der Erfindung liegt die Aufgabe zugrunde, eine Roboter-Greifvorrichtung der eingangs genannten Art zu schaffen, mit der es einfach und zeitsparend und somit mit hoher Produktivität möglich ist, stoß- und/oder bruchempfindliches Gut zu manipulieren und gleichzeitig unter dem jeweiligen Gut ein Unterlageflächenelement, bei dem es sich vorzugsweise um eine Brennunterlage handeln kann, vorzusehen, auf der das Gut dann ruht.

Diese Aufgabe wird bei der Roboter-Greifvorrichtung der eingangs genannten Art erfindungsgemäß durch die kennzeichnende Merkmale des Anspruches 1, d. h. dadurch gelöst, dass an der Greiferaufhängung in der Nachbarschaft des Greiferorganes eine Vakuumgreifeinrichtung zum Greifen eines Unterlageflächenelementes, vorzugsweise einer Brennunterlage, für den jeweiligen Gegenstand vorgesehen ist.

Mit der erfindungsgemäßen Roboter-Greifvorrichtung ist es also nicht nur möglich, mit dem Greiferorgan und mit der Gegenhaltereinrichtung den jeweiligen Gegenstand zu greifen, sondern mit Hilfe der Vakuumgreifeinrichtung ist es außerdem auch möglich, nach dem Greifen des jeweiligen Gegenstandes auch ein Unterlageflächenelement zu greifen und unter den jeweiligen Gegenstand zu positionieren.

Als zweckmäßig hat es sich erwiesen, wenn die Greiferaufhängung eine Konsole aufweist, an der das Greiferorgan in der ersten Raumrichtung verstellbar und an der die Vakuumgreifeinrichtung vorgesehen ist. Die Vakuumgreifeinrichtung kann mindestens einen, vorzugsweise mehr als einen Saugkopf aufweisen. Die Saugköpfe sind an der Konsole der Greiferaufhängung zweckmäßigerweise ortsfest angebracht.

Um unter den jeweiligen Gegenstand, der zwischen dem Greiferorgan und der Gegenhaltereinrichtung temporär festgehalten wird, zuverlässig und sicher ein Unterlageflächenelement mit Hilfe der Vakuumgreifeinrichtung positionieren zu können, ist es zweckmäßig, wenn der mindestens eine Saugkopf sich mindestens annähernd bis zur Ebene des vorzugsweise als Greiferblech ausgebildeten Greiferorganes erstreckt.

Das Greiferorgan und die Gegenhaltereinrichtung bilden Klammerorgane, zwischen welchen das zu manipulierende Gut sicher temporär festgehalten wird. Die Vakuumgreifeinrichtung dient dabei während des Festhaltens des zu manipulierenden Gutes zum Positionieren eines zugehörigen Unterlageflächenelementes unter dem jeweiligen Gut. Mit Hilfe der erfindungsgemäßen Roboter-Greifvorrichtung ist es also nicht nur möglich, ein stoß- und/oder burchempfindliches Gut zu manipulieren, sondern außerdem auch einfach und zeitsparend ein Unterlageflächenelement unter dem jeweiligen Gut zu positionieren.

Bei dem Unterlageflächenelement handelt es sich beispielsweise um eine Brennunterlage. Bei dieser Brennunterlage kann es sich zum Beispiel um ein Plattenelement aus Styropor oder dergleichen handeln.

Weitere Einzelheiten, Merkmale und Vorteile ergeben sich aus der nachfolgenden Beschreibung eines in der Zeichnung dargestellten Ausführungsbeispieles der erfindungsgemäßen Roboter-Greifvorrichtung bzw. von aufeinanderfolgenden Manipulationsschritten bzw. -Positionen der Roboter-Greifvorrichtung für ein zu manipulierendes stoß- und/oder bruchempfindliches Gut sowie eines dafür vorgesehenen Unterlageflächenelementes.

Es zeigen:
- Figur 1: eine erste Manipulationsposition der Roboter-Greifvorrichtung seitlich neben einem zu manipulierendem Gut,
- Figur 2: eine an die erste Manipulationsposition anschließende zweite Manipulationsposition der Roboter-Greifvorrichtung mit einem festgehaltenen, zu manipulierenden Gut,
- Figur 3: eine dritte Manipulationsposition der Roboter-Greifvorrichtung mit dem von ihr festgehaltenen zu manipulierenden Gut, wobei die Roboter-Greifvorrichtung über einem übereinander gestapelte Unterlageflächenelemente enthaltenden Magazin positioniert ist,
- Figur 4: eine an die dritte Manipulationsposition anschließende vierte Manipulationsposition der Roboter-Greifvorrichtung, wobei an ihr nicht nur das zu manipulierende Gut sondern auch ein unter dem Gut positioniertes Unterlageflächenelement festgelegt ist,
- Figur 5: eine an die vierte Manipulationsposition anschließende fünfte Manipulationsposition der Roboter-Greifvorrichtung,
- Figur 6: eine an die fünfte Manipulationsposition anschließende sechste Manipulationsposition der Roboter-Greifvorrichtung, wobei das Unterlageflächenelement auf einer Unterlage abgelegt und das Greiferorgan der Roboter-Greifvorrichtung in seine inaktive Ruheposition zurückbewegt worden ist, und
- Figur 7: eine siebente Manipulationsposition der Roboter-Greifvorrichtung nach der sechsten Manipulationsposition, wobei das Basiselement mit der Greiferaufhängung in die inaktive Ruheposition zurückbewegt worden sind, so dass das Gut auf dem Unterlageflächenelement flächig aufliegt.

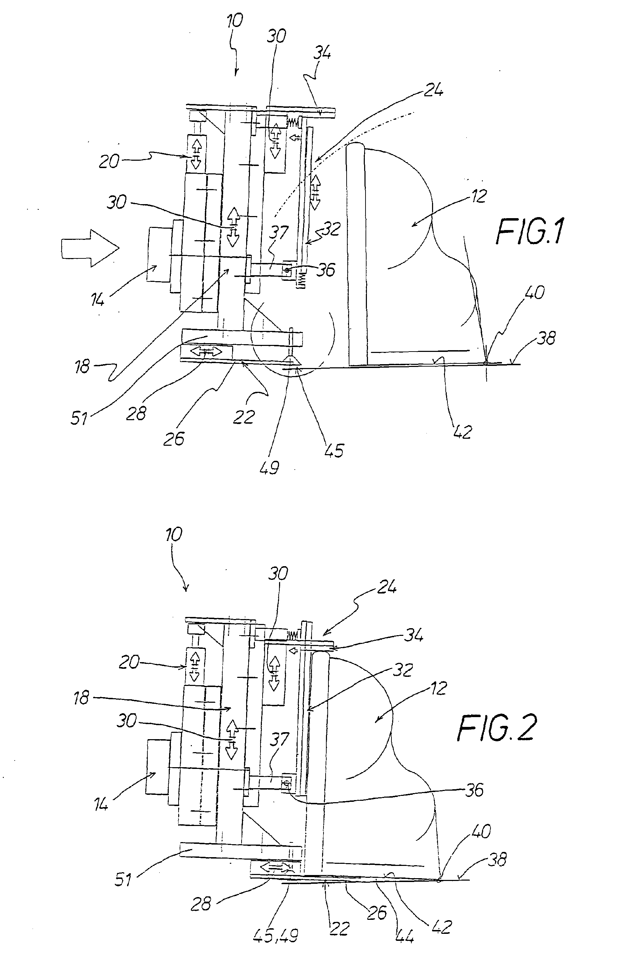

Figur 1 zeigt in einer Seitenansicht eine Roboter-Greifvorrichtung 10 zum Manipulieren von Gegenständen, insbesondere zum Manipulieren von stoßund/oder bruchempfindlichem Gut 12. Die Roboter-Greifvorrichtung 10 weist ein Basiselement 14 auf, das an einen (nicht dargestellten) Roboter anschließbar ist. Am Basiselement 14 ist eine Greiferaufhängung 18 angebracht. Zwischen der Greiferaufhängung 18 und dem Basiselement 14 ist eine Gewichtsentlastung 20 vorgesehen. Die Gewichtsentlastung 20 ist beispielsweise von einer programmierbaren Luftfeder gebildet.

An der Greiferaufhängung 18 ist ein Greiferorgan 22 und eine Gegenhaltereinrichtung 24 verstellbeweglich vorgesehen. Das Greiferorgan 22 ist von einem Greiferblech 26 gebildet, das in einer ersten Raumrichtung hin- und herverstellbar ist. Diese Verstellbarkeit in der ersten Raumrichtung ist durch den Doppelpfeil 28 angedeutet.

Die Gegenhaltereinrichtung 24 ist in einer zur ersten Raumrichtung 28 mindestens annähernd senkrechten zweiten Raumrichtung hin- und herverstellbar. Diese zweite Raumrichtung ist durch den Doppelpfeil 30 verdeutlicht. Die Gegenhaltereinrichtung 24 ist an der Greiferaufhängung 18 in der zweiten Raumrichtung 30 verstellbar angebracht. Das ist durch den zur Gegenhaltereinrichtung 24 zugehörigen Doppelpfeil 30 angedeutet.

Die Gegenhaltereinrichtung 24 weist ein Anschlagorgan 32 und ein Gegenhalterorgan 34 auf, die zueinander mindestens aneinander senkrecht orientiert sind. Das beispielsweise von einer Anschlagleiste gebildete Anschlagorgan 32 ist in der zweiten Raumrichtung 30 orientiert und mittels einer Verbindungsachse 36 über eine Konsole 37 mit der Greiferaufhängung 18 begrenzt federnd schwenkbeweglich verbunden. Das Gegenhalterorgan 34 ist dem Anschlagorgan 32 an dem von der Verbindungsachse 36 entfernten Endabschnitt des Anschlagorganes 32 beweglich zugeordnet.

Figur 1 zeigt eine erste Manipulationsposition der Roboter-Greifvorrichtung 10. In dieser ersten Manipulationsposition ist die Roboter-Greifvorrichtung 10 in bezug auf einen Untergrund 38, auf dem das zu manipulierende Gut 12 steht, gegen die Lotrechte geringfügig nach vorne oben geneigt. Das zu manipulierende Gut 12 wird mit Hilfe des federnden Anschlagorganes 32 geringfügig um eine Kippkante 40 angekippt, so dass sich zwischen dem Untergrund 38 und einer Auflagefläche 42 des Gutes 12 ein sich zur Kippkante 40 hin verjüngender Keilraum 44 ergibt. In diesem Keilraum 44 wird dann - ausgelöst durch einen Berührungssensor, der vom Anschlagorgan 32 gebildet wird - das Greiferorgan 22 der Roboter-Greifvorrichtung 10 in den Keilraum 44 hineinbewegt und das Gegenhalterorgan 34 an dem Gut stoßfrei, sanft angelegt. Diese zweite Manipulationsposition ist in Figur 2 dargestellt, in der gleiche Einzelheiten mit den selben Bezugsziffern wie in Figur 1 bezeichnet sind, so dass es sich erübrigt, in Verbindung mit Figur 2 alle diese Einzelheiten noch einmal detailliert zu beschreiben.

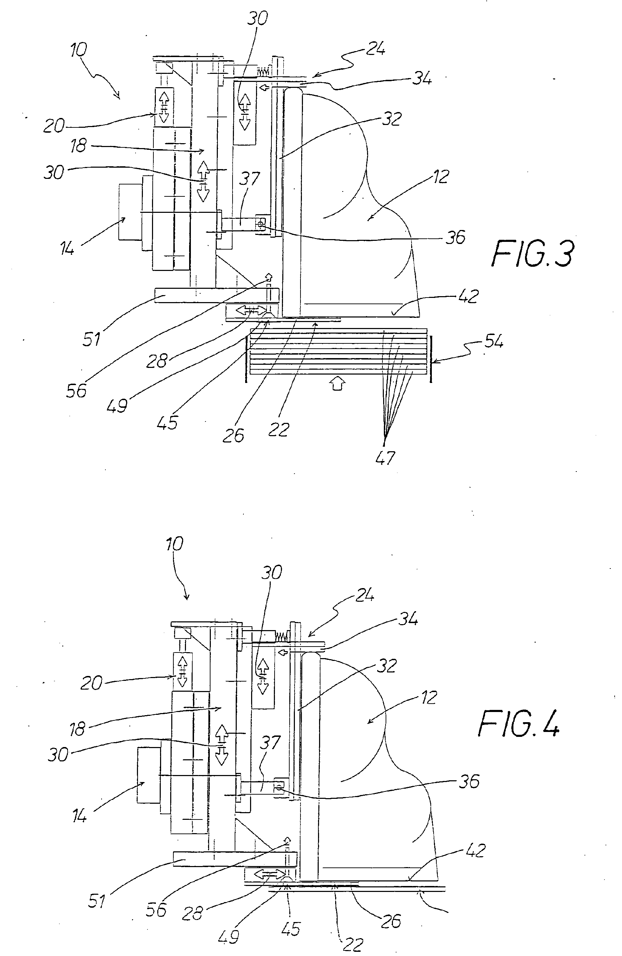

An der Greiferaufhängung 18 ist in der Nachbarschaft des Greiferorganes 22 eine Vakuumgreifeinrichtung 45 vorgesehen, die zum Greifen eines Unterlageflächenelementes 47 (siehe die Figur 3 bis 7) vorgesehen ist. Die Vakuumgreifeinrichtung 45 weist mindestens einen, vorzugsweise mehr als einen Saugkopf 49 auf, die zum Greifen, temporären Festhalten und Wiederfreigeben des jeweiligen Unterlageflächenelementes 47 vorgesehen sind. Der mindestens eine Saugkopf bzw. die Saugköpfe 49 sind an einer Konsole 51 angebracht, an der das Greiferorgan 22 in der ersten Raumrichtung 28 linear verstellbar vorgesehen ist.

Sobald das zu manipulierende Gut 12 zwischen dem Greiferorgan 22 und der Gegenhaltereinrichtung 44 festgehalten ist, kann das Gut 12 zu einem Magazin 54 bewegt und über diesem positioniert werden, wie die Figur 3 zeigt. Im Magazin 54 befinden sich eine Anzahl Unterlageflächenelemente 47, die lose übereinandergestapelt sind. Die Roboter-Greifvorrichtung 10 wird über dem Magazin 54 derartig positioniert, dass die Saugknöpfe 49 der Vakuumgreifeinrichtung 45 sich in der Nachbarschaft des obersten Unterlageflächenelementes 47 befinden. Anschließend werden die Saugknöpfe 49 mit einer (nicht dargestellten) Vakuumquelle verbunden und mit einem Vakuum beaufschlagt, was in Figur 3 durch den Pfeil 56 angedeutet ist. Auf diese Weise wird das besagt Unterlageflächenelement 47 an die Vakuumgreifeinrichtung 45 der Roboter-Greifvorrichtung 10 angesaugt und an dieser festgehalten. Wie aus Figur 4 ersichtlich ist, befindet sich dabei das Greiferblech 26 zwischen dem Unterlageflächenelement 47 und der Auflagefläche 42 des Gutes 12.

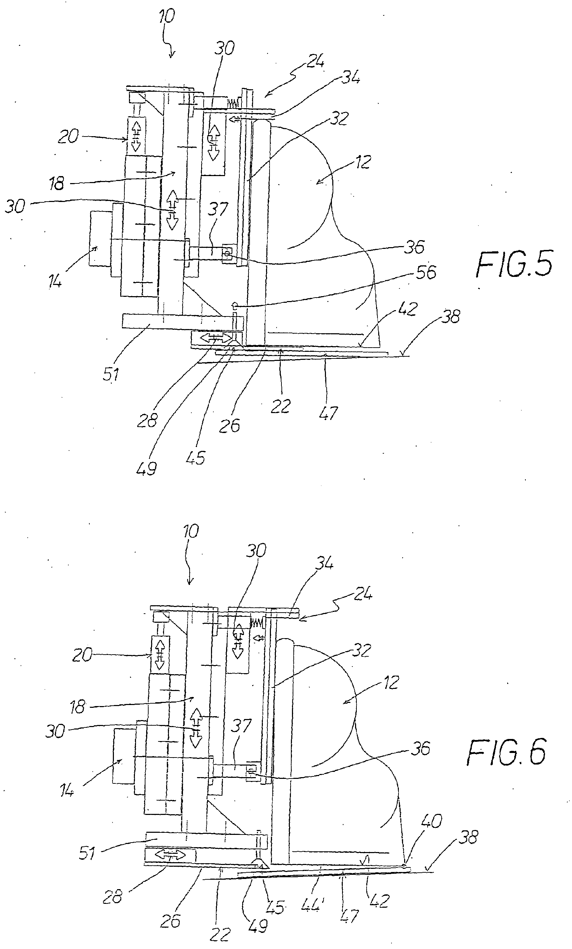

Die Figur 5 verdeutlicht eine an die Manipulationsposition gemäß Figur 4 anschließende fünfte Manipulationsposition, bei der das Gut 12 und das unter diesem positionierte Unterlageflächenelement 47 auf einem Untergrund 38 nach vorne oben geringfügig schräg geneigt abgesetzt werden. Anschließend wird in der schräg geneigten Position der Roboter-Greifvorrichtung 10 das Greiferblech 26 des Greiferorgans 22 in der ersten Raumrichtung 28 in die inaktive Ruheposition zurückbewegt und die Gegenhaltereinrichtung 24 in der zweiten Raumrichtung 30 in bezug auf die Greiferaufhängung 18 vom Gut 12 wegbewegt, so dass das Gut 12 mit seiner Kippkante 40 auf dem zugehörigen Unterlageflächenelement 47 zur Auflage kommt, wobei zwischen den Unterlageflächenelement 47 und der Auflagefläche 42 des Gutes 12 ein Keilraum 44' gegeben ist, wie aus Figur 6 ersichtlich ist. Anschließend wird die Roboter-Greifvorrichtung 10 vom Gut 12 seitlich wieder entfernt, so dass das Gut 12 mit seiner Auslagefläche 42 auf dem Unterlageflächenelement 47 vollflächig zur Auflage kommt.

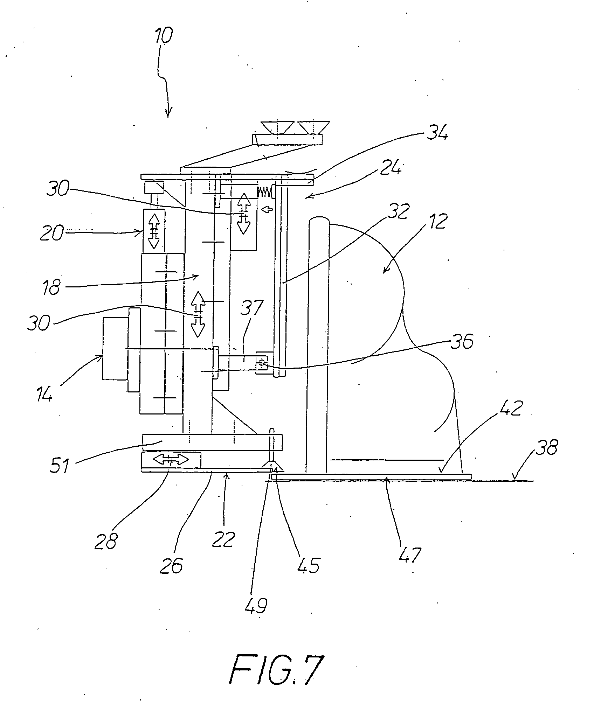

In der in Figur 6 dargestellten sechsten Manipulationsposition wird die Verbindung zwischen der (nicht dargestellten) Vakuumquelle und der Vakuumgreifeinrichtung 45 wieder unterbrochen, so dass die Roboter-Greifvorrichtung 10 vom Gut 12 seitlich wegbewegt werden kann, wie die Figur 7 zeigt.

Gleiche Einzelheiten sind in den Figuren 1 bis 7 jeweils mit den selben Bezugsziffern bezeichnet, so dass es sich erübrigt, in Verbindung mit allen Figuren alle Einzelheiten jeweils detailliert zu beschreiben.

## Patentansprüche

1. Roboter-Greifvorrichtung zum automatischen Manipulieren von Gegenständen (12), insbesondere von stoß- und/oder bruchempfindlichem Gut (12), wobei die Roboter-Greifvorrichtung (10) ein Basiselement (14) und eine am Basiselement (14) angebrachte Greiferaufhängung (18) aufweist, wobei zwischen der Greiferaufhängung (18) und dem Basiselement (14) eine Gewichtsentlastung (20) vorgesehen ist, und an der Greiferaufhängung (18) ein Greiferorgan (22) in einer ersten Raumrichtung (28) und eine Gegenhaltereinrichtung (24) in einer zur ersten Raumrichtung (28) mindestens annähernd senkrechten zweiten Raumrichtung 30 hin- und herverstellbar angeordnet sind,
**dadurch gekennzeichnet,**
**dass** an der Greiferaufhängung (18) in der Nachbarschaft des Greiferorganes (22) eine Vakuumgreifeinrichtung (45) zum Greifen und temporären Festhalten eines Unterlageflächenelementes (47), vorzugsweise einer Brennunterlage, für den jeweiligen Gegenstand (12) vorgesehen ist.

2. Roboter-Greifvorrichtung nach Anspruch 1,
**dadurch gekennzeichnet,**
**dass** die Greiferaufhängung (18) eine Konsole (51) aufweist, an der das Greiferorgan (22) in der ersten Raumrichtung (28) verstellbar und an der die Vakuumgreifeinrichtung (45) vorgesehen ist.

3. Roboter-Greifvorrichtung nach Anspruch 1 oder 2,
**dadurch gekennzeichnet,**
**dass** die Vakuumgreifeinrichtung (45) mindestens einen, vorzugsweise mehr als einen Saugkopf (49) aufweist.

4. Roboter-Greifvorrichtung nach Anspruch 3,
**dadurch gekennzeichnet,**
**dass** der mindestens eine Saugkopf (49) sich mindestens annähernd bis zur Ebene des als Greiferblech (26) ausgebildeten Greiferorganes (22) erstreckt.
